# EUROPÄISCHE PATENTSCHRIFT

(11) **EP 0 370 221 B1**
(45) Veröffentlichungstag und Bekanntmachung des Hinweises auf die Patenterteilung: **26.05.1993**
(21) Anmeldenummer: 89118927.6
(22) Anmeldetag: 12.10.1989
(51) Int. Cl.: G05D 7/06, E03F 5/10, F04D 15/00

(54) **Verfahren zur Begrenzung der Abflussmenge aus einem Flüssigkeitsbehälter**
Method of limiting discharge flows from a container for liquids
Méthode de limitation de la décharge d'un réservoir de liquide

(30) Priorität: 22.10.1988 DE 3836065
(43) Veröffentlichungstag der Anmeldung: 30.05.1990
(73) Patentinhaber: KSB Aktiengesellschaft, 67227 Frankenthal (DE)
(72) Erfinder: Schiele, Otto, D-8905 Mering (DE)

(56) Entgegenhaltungen:
- DE-A- 3 617 284
- PATENT ABSTRACTS OF JAPAN, Band 10, Nr. 143 (P-459)(2200), 27. Mai 1986 ; & JP-A-60 263 218
- REGELUNGSTECHNISCHE PRAXIS, Band 22, Nr. 6, Juni 1980, Seiten 181-186, München (DE) ; G. Haby : "Drehzahlveränderbare Pumpen als Stellglieder in Regelkreisen"

## Beschreibung

Die Erfindung betrifft ein Verfahren und Einrichtungen zur Begrenzung der einem Flüssigkeitsbehälter über einen Abfluß entströmenden Flüssigkeitsmenge, insbesondere zur Drosselung der Abflußmenge aus einem Abwasserbecken. Die Erfindung ist vor allem auch bei Regenüberlaufbecken, Stauraumkanälen und Regenrückhaltebecken anwendbar.

Die Notwendigkeit der Abflußmengenregelung ergibt sich bei den oben als Beispiel genannten Anwendungsfällen aus dem Umstand, daß die biologische Reinigungswirkung einer Kläranlage nur bei bestimmten Mengen zufließenden Abwassers gewährleistet ist. Große Mengendifferenzen können zu erheblichen Problemen, im Extremfall sogar zum Ausfall der biologischen Reinigung führen. Es ist daher Bedingung, daß unabhängig vom Füllstand im Becken eine konstante Abwassermenge abgeführt wird.

Die bis dato zur Abflußmengenregelung eingesetzten Drosseleinrichtungen, wie Waagedrossel, Wirbeldrossel, Hydroslide oder elektromotorisch betriebene geregelte Schieber arbeiten im unteren Mengenbereich von etwa 5 bis 30 l/s unzuverlässig, da die Mengenreduktion durch eine erhebliche Querschnittsveränderung des Abflußkanals bewirkt wird. Wegen der im Abwasser enthaltenen Beimengungen kommt es hier sehr leicht zu Verstopfungen oder zu einem Ausfall der Steuerung. Die Beseitigung der Störquelle, meist ein Feststoffteil, ist sehr aufwendig und vielfach erst bei entleertem Becken möglich.

Der Erfindung liegt die Aufgabe zugrunde, ein Verfahren und Einrichtungen zu seiner Durchführung zu schaffen, mit deren Hilfe eine konstante Abflußmengenbegrenzung ohne Querschnittsverengung des Abflusses möglich ist.

Die gestellte Aufgabe wird erfindungsgemäß dadurch gelöst, daß in dem Abfluß eine Gegenströmung erzeugt wird. Dies geschieht in zweckmäßiger Weise durch eine Kreiselpumpe. Die Abflußleitung des Beckens wird also zur Pumpendruckseite geführt, so daß der Beckenvordruck durch den Förderdruck der Kreiselpumpe so einzustellen ist, daß über die Pumpensaugseite eine kontinuierliche Abflußmenge erreicht wird. Der Grundgedanke der Erfindung liegt darin, eine Reduzierung des Vordrucks durch hydraulische Reibung zu erreichen. Eine Querschnittsverengung wird somit vermieden. Im Normalfall kann eine diesem Verfahren folgende Gegenstromanlage mit konstanter Drehzahl betrieben werden. Die dabei erzielte Abflußmenge ist nahezu konstant. Bei Anlagen mit hoher Regelgenauigkeit bzw. bei variablen Abflußmengen ist eine Drehzahlsteuerung der Gegenstrompumpe zu empfehlen.

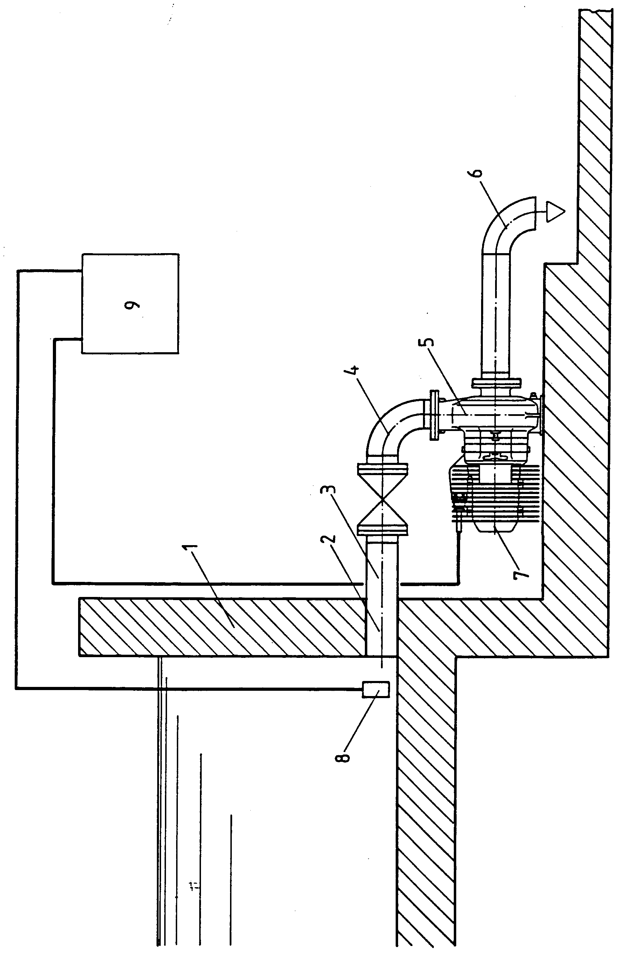

Anhand eines Ausführungsbeispiels wird die Erfindung näher erläutert. Die Zeichnung zeigt den Abflußbereich eines Regenüberlaufbeckens in schematischer Darstellung.

Im Regenüberlaufbecken (1) wird Regenwasser bis zu einer Höhe von etwa 6 m gespeichert. In die vom Abfluß (2) des Regenüberlaufbeckens (1) ausgehende Abflußleitung (3) mündet die Druckleitung (4) einer Abwasserkreiselpumpe (5). Über die Saugleitung (6) der Abwasserkreiselpumpe (5) fließt das aus dem Regenüberlaufbecken (1) kommende Wasser schließlich ab.

Der die Abwasserkreiselpumpe (5) antreibende Elektromotor (7) wird in Abhängigkeit der von einem Druckaufnehmer (8) im Regenüberlaufbecken (1) gemessenen Füllstandshöhe mit Hilfe eines statischen Frequenzumformers und eines Reglers, die in einem Gehäuse (9) angeordnet sind, in seiner Drehzahl geregelt. Der Vordruck des Regenüberlaufbeckens (1) wird somit durch den von der Abwasserkreiselpumpe (5) erzeugten Förderdruck so eingestellt, daß sich am Saugstutzen (6) eine Abflußmenge hoher Regelgenauigkeit ergibt.

## Patentansprüche

1. Verfahren zur Begrenzung der einem Flüssigkeitsbehälter über einen Abfluß entströmenden Flüssigkeitsmenge, insbesondere zur Drosselung der Abflußmenge aus einem Abwasserbecken, **dadurch gekennzeichnet,** daß in dem Abfluß (2, 3) eine Gegenströmung erzeugt wird.

2. Verfahren nach Anspruch 1, gekennzeichnet durch eine konstante Gegenströmung.

3. Verfahren nach Anspruch 1, gekennzeichnet durch eine geregelte Gegenströmung.

4. Einrichtung zur Durchführung des Verfahrens nach den Ansprüchen 1 und 2, gekennzeichnet durch eine mit konstanter Drehzahl betriebene Kreiselpumpe (5), deren Druckseite an den Abfluß (2, 3) des Flüssigkeitsbehälters (1) angeschlossen ist.

5. Einrichtung zur Durchführung des Verfahrens nach den Ansprüchen 1 und 3, gekennzeichnet durch eine Kreiselpumpe (5) mit geregelter Drehzahl, deren Druckseite an den Abfluß (2, 3) des Flüssigkeitsbehälters (1) angeschlossen ist.

## Claims

1. A method for limiting the rate of flow of a liquid flowing into a liquid container via a drain, more particularly for limiting the rate of drain flow from a sewage tank, characterized in that an oppositely directed flow is produced in the drain (2 and 3).

2. The method as claimed in claim 1, characterized by a constant oppositely directed flow.

3. The method as claimed in claim 1, characterized by a variable oppositely directed flow.

4. An apparatus for performing the method as claimed in claims 1 and 2, characterized by a centrifugal pump (5) driven with a constant speed of rotation and whose delivery port is connected with the drain (2 and 3) of the liquid container (1).

5. An apparatus for performing the method as claimed in claims 1 and 3, characterized by a variable speed of rotation centrifugal pump (5) whose delivery port is connected with the drain (2 and 3) of the liquid container (1).

## Revendications

1. Procédé pour la limitation d'une quantité de liquide sortie d'un réservoir à liquide par une voie d'écoulement, en particulier pour modérer la quantité écoulée d'un bassin de récupération des eaux usées, caractérisé par le fait qu'un contre-courant est généré dans la voie d'écoulement (2, 3).

2. Procédé selon la revendication 1 caractérisé par un contre-courant constant.

3. Procédé selon la revendication 1 caractérisé par un contre-courant réglé.

4. Dispositif permettant la mise en oeuvre du procédé selon les revendications 1 et 2 caractérisé par une pompe centrifuge (5) soumise à une vitesse de rotation constante dont le côté refoulement est relié à la voie d'écoulement (2, 3) du réservoir à liquide (1).

5. Dispositif permettant la mise en oeuvre du procédé selon les revendications 1 et 3 caractérisé par une pompe centrifuge (5) à vitesse de rotation réglée dont le côté refoulement est relié à la voie d'écoulement (2, 3) du réservoir à liquide (1).
